Europäisches Patentamt

European Patent Office

Office européen des brevets

(11) Publication number: **0 274 163**
**A2**

# EUROPEAN PATENT APPLICATION

(21) Application number: 87202632.3

(22) Date of filing: 29.12.87

(51) Int. Cl.4: **A23B 7/16** , A23L 3/32

(30) Priority: 05.01.87 IT 1900687

(43) Date of publication of application:
**13.07.88 Bulletin 88/28**

(84) Designated Contracting States:
**AT BE CH DE ES FR GB GR IT LI LU NL SE**

(71) Applicant: **Dott. Bonapace & C. S.p.A.**
**Via Canova, 12**
**I-20145 Milano(IT)**

(72) Inventor: **Bonapace, Franco**
**Via Canova, 21**
**I-20145 Milano(IT)**
Inventor: **Cosentino, Roberto**
**Via Rucellai 20/7**
**I-20126 Milano(IT)**

(74) Representative: **Riccardi, Sergio**
**Riccardi & Co. Via Macedonio Melloni, 32**
**I-20129 Milano(IT)**

(54) **Method for covering fruit and vegetable products in general with protective substances.**

(57) The object of the present invention concerns a method of treatment and covering of foodstuff products such as fruit, vegetables and products of vegetable origin in general for use as food, plants and cut flowers with substances in the form of protective film so as to conserve or prolong the state of freshness or conservation of the products themselves, or to improve and/or modify their external appearance.

The application of the protective substances, both in solution and in powder form, is effected by means of an electrostatic atomiser in the case of liquids or an electrostatic diffuser in the case of powders, subjected to a high voltage.

This system permits an enveloping, uniform and homogeneous distribution of the covering substances over the products to be treated, even when the latter have an irregular shape, improving the coverage effect and noticeably reducing the losses of the product applied.

Electrostatic application thus permits accurate control of the quantity of covering substance, improving the final effect and thus the state of conservation of the products.

Fig. 1

## "METHOD FOR COVERING FRUIT AND VEGETABLE PRODUCTS IN GENERAL WITH PROTECTIVE SUBSTANCES"

The object of the present invention is a method for covering fruit, vegetables, plants, cut flowers and vegetable products in general with protective substances, conservants or waxes, fungicides and any other substances which are to be applied in solution or in powder.

Fruit, vegetables, plants and flowers continue to breathe after they have been harvested. Many processes have been prepared to retard or control this breathing in order to prolong the freshness of these products. Generally this is accompanied by control of the temperature and humidity of the place in which the products are stored.

If the products are exposed to the ambient temperature they normally dry up or, in any case, there is a loss of water which detracts from the image of freshness of the product and also increases the probability of deterioration of the product because of bacterical activity or the formation of mould.

An important system for minimising or eliminating these problems is to systematically cover fruit, vegetables or flowers with substances which form a protective film in order to control transpiration and prolong their freshness.

There are basically two ways of applying these protective substances: the fruit and vegetables are either immersed in liquid solutions or the liquid solutions are sprayed onto them through nozzles.

In the first case, the total quantity of the substances used is very often much lower than the quantity which is really necessary because not all of the solution prepared in the immersion tanks can be utilized. In addition, the solutions can become oxidised, can ferment or deteriorate after a certain time and thus become uneconomic.

In the second system, the substances are applied to the products by means of atomisers which spray the fruit and vegetables which pass under the atomisers, carried on a conveyor belt. Compared to the first method, this system has the advantage of spraying a quantity of protective substances which is proportional to the quantity of products transported on the belt.

In some cases for example in the treatment of citrus fruits, the conveyor belt is constituted by rollers which rotate on their own axis, moving in the forward direction in order to ensure that the citrus fruits also rotate and thus are covered more effectively. Finally, in some cases, there is also a final treatment system in which the covering substance applied is evenly spread over the products.

Whatever the type of equipment used, even the spraying system described above has the great disadvantage of producing a large loss of liquid which is atomised in the air (20-40%) which has a decidedly negative effect on the final cost of the application and the functionality of the system. Numerous filmforming substances are highly volatile (solvent-based) and are highly irritant when inhaled by the machine operators.

The object of the present invention specifically regards the system of application of the sprayed substances which are applied electrostatically.

The film-forming substances, both powdered and in liquid form, are subjected to an electrostatic charge during the treatment by means of electrostatic generators connected to the diffusors or the sprayers.

With this system, all the particles which constitute the atomised substance become charged. This charge makes the particles electrically unstable and this state continues until they hit a zero potential target (fruit, flower, plant, vegetable in general) and become neutralised and then exit from the applied electrostatic field.

The electrostatic field which is applied to the particles in no way modifies their chemical, physical and organoleptic characteristics. The difference of electric potential between the applied field (electrode) and the product is such that the particles, follow the lines of forces which are induced by the electrode, and finish up on the whole surface of the target (equipotential charge) producing an enveloping effect, ensuring coverage of the surface of the product which is not facing the atomisers.

Thus this system permits complete, uniform and enveloping coverage of the products, employing smaller quantities of the substances.

Since, as has already been said, the electrostatically charged particles are highly unstable and they are neutralised by passing the zero potential (target) as rapidly as possible, the result is the elimination of the fog and the loss of product in the workplace. The small volatile part which remains can, in this case, easily be extracted and recovered, thus eliminating an environmental problem and reducing waste.

The functioning principle is based on the high potential difference (PD) applied to the atomiser for liquids and the diffusor for powders which. inserted in the equipment, induce a charge of the opposite sign on the product to be treated, to which they are orientated, and thus an attraction of the electrostatically charged particles.

The distribution of the atomised particles of liquid or the diffused powders, which have received a charge from the P.D. applied, which can be between 30 and 90 KV, follows the lines of force established between the electrode (of the atomisers or diffusors) and the product. Since the conveyor belt equipment is earthed, there is no formation of counter-ionisation phenomena and, therefore, no build-up of potentially dangerous residual charges.

The electrostatic-type equipment is constituted by one or more atomisers and/or one or more powder diffusers, placed above the moving equipment of the products to be treated, supported by a bracket mounted on a coupling and possibly located inside a special atomising chamber.

The motion transmitted to the material by the transporting equipment guarantees that the electrostatically applied particles are distributed uniformly over the whole of the product which is within the area of electrostatic induction.

The atomiser for liquids is provided with a return system which stops the passages from becoming blocked and is controlled by a variable-delivery continuous-flow pump.

The electrostatic force applied to the atomised liquid produces a stronger microionisation than that which can be normally obtained with traditional systems because of the internal repulsion of atomised particles of the same sign. Thus, smaller size particles can be obtained and, as a result, the covering film which is formed is much more uniform and effective than that which can be obtained with traditional systems.

The passages are made from non-conducting materials and, if necessary, further insulated. If the atomiser is a rotating atomiser, it can have a circular air blade and/or electrostatic deflectors or other mechanical systems which permit the angle of atomisation to be adjusted and/or limited.

For the diffusion of covering substances in powder form, traditional corona electrostatic diffusers with low production of free ions or charged by triboelectricity can be used.

The electrostatic diffusor for powders works on the same principle. It is mounted on an articulated joint which permits the regulation of the distance from the product and the clearance angle within the atomising chamber situated above the transported product and is supplied by a dehumidified air fluidiser. The flow of powder is controlled by an adjustable-flow Venturi which permits the air/powder mixture sent to the electrostatic diffusor to be controlled with extreme accuracy so that uniformity is guaranteed even in the case of application of covering substance to the product to be treated up to a percentage of less than one per cent.

The Venturi system, together with the electrostatic diffusor, guarantees the regulation of the quantity of powder to be applied during the process and ensures that it is distributed evenly in a thin layer which adheres firmly to the underlying stratum through time, and for all the product being transported.

The amount to be applied to each item of the product, for fruit and vegetables, will depend on the type of substance used, the effects to be obtained and the specific instructions on the application of the said product. The quantity can however be modified by adjusting the electrostatic diffusor or atomiser or by modifying the running speed or movement of the product to be treated and can easily be defined by an expert in the field.

If products in powdered form (fungicides, conservants, etc.) are applied electrostatically and dry, the granulometry must be between 0 and 200 microns (granules which exceed this must be sieved and re-cycled); there must be no lumps and the humidity must not be more than 3.5%. Powdered products can be applied electrostatically in the form of microcrystals, powder or microcapsules.

Active substances can be applied as such, or mixed with inert products or substances or any technological additives. If a mixture of two or more ingredients is used for dry covering, the granulometry of the ingredients must be as similar as possible to ensure that the layer of film has the same percentage composition as the mixture loaded into the diffusor since the system of fluidisation and the electrostatic application system create a form of separation of the various ingredients, favouring those with the smallest granulometry.

Therefore, in the case of mixtures where the granulometry is, of necessity, not the same, it could be convenient to apply them in solution form. In this case, the best solvent is water or a solution of water and alcohol or an oily solution, used in a quantity which is sufficient to produce a syrupy consistency.

The solution can contain other ingredients which are acceptable for use on foodstuffs, such as emulsifiers, dispersants, natural or synthetic colourings or ingredients which increase the conductivity of the solution, thus permitting electrostatic application.

If the transport system for the product is constituted by a roller conveyor belt then these must be made of a semiconductive material such as polypropylene or polythene and they must be earthed.

In this case, the conductivity of the products to be covered (which contain water) is greater than that of the rollers and thus the electrostatic field on the products is stronger than that on the rollers. As a result, the electrostatically-produced film on the fruit and vegetables in general is better.

Since, as has already been said, the enveloping effect of electrostatic spraying also permits the side of the fruit facing away from the atomiser to be covered, in some cases the transport system does not necessarily have to be a roller conveyor belt so that the products can roll.

In this case, the transport system can simply consist of a slatted belt with the slats placed transversally to the direction of motion, supporting and spacing out the product. If the slats are small enough, this solution compared to that of the roller belt minimises the surface exposed to electrostatic spraying and allows better exposure of the product to be treated.

A single atomiser placed above the transport system is enough to produce a perfect enveloping effect, maximising the application and further reducing waste, or another atomiser can be placed under the belt if so desired.

The slatted belt can be provided with a cleaning tank to ensure continuous cleaning of the belt, thus avoiding the accumulation of wax or other film-forming products on the belt itself.

To provide a clearer illustration of the way the method of this invention works, purely as a non-limiting example, two embodiments of film-forming installations are briefly described, referring to the attached illustrative drawings, in which:

Figure 1 shows the layout of a film-forming installation using a roller conveyor belt seen from above;

Figure 2 shows a cross-section of a second installation using a slatted conveyor belt; and

Figure 3 shows the installation of Figure 2 seen from above.

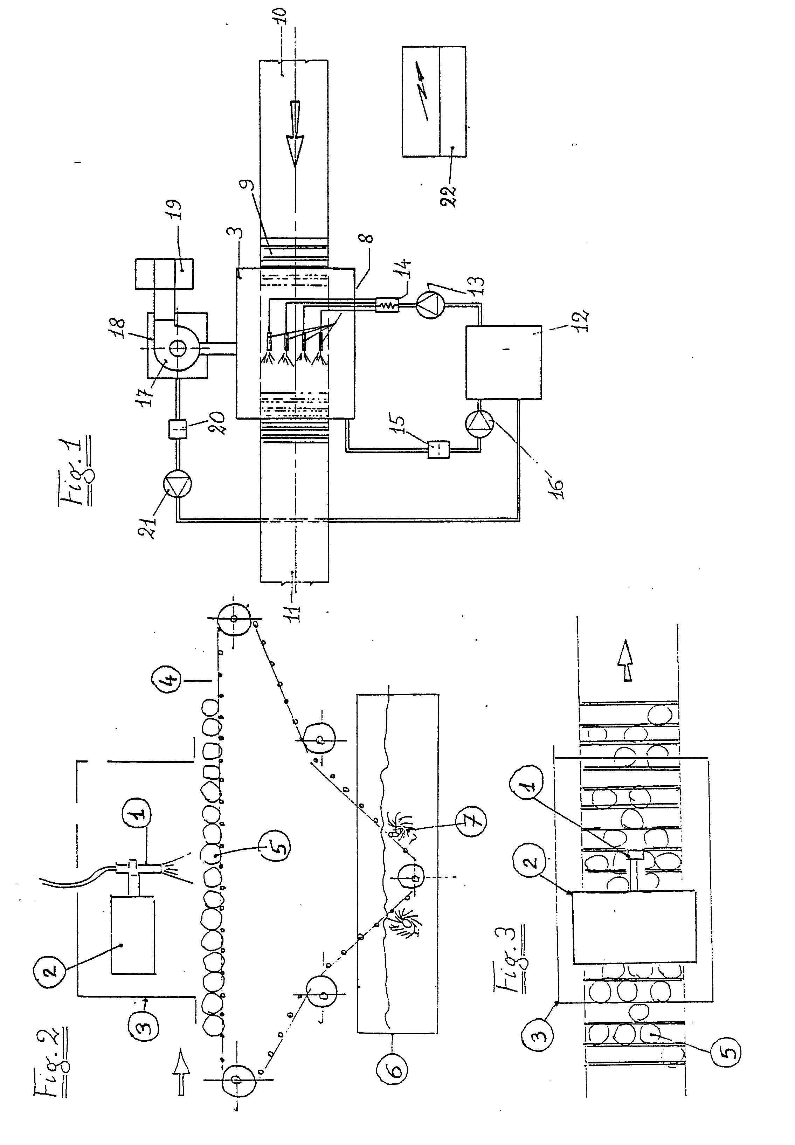

Referring first to Figure 1, the installation comprises a chamber 3 in which a group of electrostatic spray guns have been arranged, spraying the covering substances onto the product passing on the rollers 9, brought by the feeder belt 10 and then carried away by the unloading belt 11.

The covering substance reaches the spray guns 8 from the tank 12 by way of the pump 13 and the heater 14. Excess substance falling under the rollers is recovered by means of the filter 15 and the pump 16 and returned to the tank 12.

Any substance which remains suspended in the air in the chamber 3 is sucked out by the fan 17, separated by the separator 18 which discharges the air into the workplace through the final filter 19, while the separated substance is recovered by yet another filter 20 and the pump 21 and also returned to the tank 12 which thus contains recovered substance and virgin substance which is added to replace the quantity effectively used to cover the products. Finally the installation has a control station 22 for the operator.

The installation shown in Figures 2 and 3 is substantially the same as the one in Figure 1. Only those parts which are different have been illustrated. The products 5 are loaded onto a slatted conveyor belt 4 and not onto a roller conveyor belt, thus permitting more of the surface of the product to be exposed to the enveloping effect of the electrostatic atomisation carried out by the atomiser 1 moved by the pump bob 2 inside the chamber 3. The lower return section of the slatted conveyor belt 4 passes through a cleaning tank 6 which contains suitable solvents or detergents and which is fitted with rotating brushes 7 for the removal of any accumulated covering substances.

These covering substances can also be recovered from the cleaning tank by means of suitable separation, filtering and re-cycling systems.

The description given above demonstrates how the objectives of the method of the present invention are achieved and also clearly describes the special advantages provided by the said method.

While special emphasis has been dedicated in this description to film-forming substances in aqueous or oily solutions or solvent-based solutions, it must be clearly understood that the method of the present invention is equally effective for the application of powdered substances such as antioxidants, mould inhibitors or conservants in general in powder form, following the instructions provided.

In addition, the method of the present invention can be used for the application of substances in solution or in powder for the purpose of improving the aesthetic appearance or indeed transforming the external appearance of the aforesaid vegetable products.

Finally, it must be understood that numerous modifications, variations, additions and/or substitutions of elements can be made to the method according to the present invention without in any way infringing on the spirit and scope of the invention and still remaining within its ambit of protection, as defined in the attached claims.

## Claims

1. Method for covering with a protective film and treating fruit, vegetables, flowers, plants and vegetable products in general for use as food or for other uses characterised by the fact that the application on the products of film-forming substances, both dry and in solution, is effected by electrostatic methods, electrostatically charging up the atomised substances, in such a way that the atomised particles are mainly attracted by the products to be treated, and inducing a charge of the opposite sign on the product to be treated because of the high potential difference applied to the distributing device, or earthed with zero potential.

2. Method according to claim 1, characterised by the fact that the electrostatic application by means of diffusors or atomisers can be carried out using both powdered substances and liquid substances.

3. Method according to claim 1, characterised by the fact that the application of powders is for products with a granulometry of between 0 and 200 microns and, in the case of liquids, if these are non-conductive additives such as alcohols, emulsifiers and similar suitable substances, to give non-limiting examples, are also added to the said liquids.

4. Method according to claim 1, characterised by the fact that the application of substances, whether liquid or in powder form, is carried out by means of electrostatic atomisers or diffusers to which a voltage of between 0 and 100 kV is applied.

5. Method according to claim 1, characterised by the fact that the substances applied can be constituted by protective film-forming substances, either water-based, oil-based or solvent-based or in the form of powder, in addition to the anti-mould, anti-oxidant, colouring substances etc. which are normally used in the treatments carried out on fruit, vegetables and vegetable products in general for use as foodstuffs, plants and cut flowers.

6. Method according to claim 1, characterised by the fact that the aforesaid products such as fruit, vegetables etc. are treated by moving them on metal or plastic material conveyor belts using belts or roller systems or other means suitable for transporting the products.

7. Method according to claim 6, characterised by the fact that the conveyor belts are constituted by roller belts in semi-conductive material such as polypropylene or polythene, suitably earthed, which permit the products to roll so that they are completely covered.

8. Method according to claim 6, characterised by the fact that the conveyor belts are constituted by slatted belts, the slats being transversal to the direction of movement, capable of supporting and spacing out the products, the enveloping of the products being produced by the electrostatic effect, without the need for rolling the products.

9. Method according to claim 8, characterised by the fact that the slatted belts are provided with an automatic cleaning system, constituted by a tank fitted with rotating brushes, in which the slatted belts are immersed during the return section.

10. Method according to one or more of the preceding claims, characterised by the fact that the atomiser or atomisers are provided with a pump bob for their movement and an articulated joint for orientation.

11. Equipment for the implementation of the method according to one or more of the preceding claims, basically structured as explained in the description and illustrated in the drawings attached hereto.

12. Method according to one or more of the preceding claims, particularly according to the descriptions given in precedence as a non-limiting example.

13. Method for the covering of the afore-mentioned food products with substances having protective properties or aesthetic functions as previously described for the objectives stated here above.

14. Products such as fruit, vegetables and vegetable products in general for use as foodstuffs, cut flowers or plants treated with protective substances, shiners, anti-mould substances etc. obtained each time by electrostatic means using the method according to one or more of claims 1-10.

Fig. 2

Fig. 1

Fig. 3

0 274 163